# EUROPÄISCHE PATENTSCHRIFT

(11) **EP 2 754 344 B1**
(45) Veröffentlichungstag und Bekanntmachung des Hinweises auf die Patenterteilung: **21.09.2016**
(21) Anmeldenummer: 14150738.4
(22) Anmeldetag: 10.01.2014
(51) Int. Cl.: A01C 3/02, B01F 7/00, B01F 7/06, B01F 3/04, F04D 29/18, F04D 29/22

(54) **Strömungsmaschine für Flüssigkeiten**
Flow engine for liquids
Turbomachine pour liquides

(30) Priorität: 15.01.2013 AT 500182013
(43) Veröffentlichungstag der Anmeldung: 16.07.2014
(73) Patentinhaber: Gritzner, Gottfried, 5152 Michaelbeuern (AT)
(72) Erfinder: Gritzner, Gottfried, 5152 Michaelbeuern (AT)
(74) Vertreter: Patentanwaltskanzlei Hübscher

(56) Entgegenhaltungen:
- WO-A1-2005/014155
- AT-B- 407 689
- BE-A- 463 837
- DE-A1- 2 835 914
- GB-A- 1 365 385
- US-A- 4 647 215

## Beschreibung

Die Erfindung bezieht sich auf eine Strömungsmaschine für Flüssigkeiten mit einem angetriebenen Propeller, der wenigstens einen entlang einer Propellerwelle wendelförmig verlaufenden Propellerflügel mit einer Saug- und einer Druckkante aufweist.

Um Strömungsmaschinen, die als Rührwerk zur Lufteintragung in Gülle eingesetzt werden, so zu verbessern, dass die Abhängigkeit der Luftansaugung von einem Luftspalt zwischen einer von der Propellerwelle durchsetzten Stirnwand und den Propellerflügeln vermieden wird, ist es bekannt (AT 407 689 B), den Propeller saugseitig mit einer an die radial verlaufenden Saugkanten der Propellerflügel anschließenden, einen sich propellerseitig ergebenden Unterdruckraum axial abschließenden Scheibe zu versehen, wobei dieser Unterdruckraum mit der Luftansaugleitung verbunden wird. In den Unterdruckraum, der sich zwischen den Propellerflügeln und der die Propellerflügel axial abschließenden Scheibe ergibt, wird Luft angesaugt, die mit der wiederum von außen angesaugten Flüssigkeit axial ausgestoßen wird, sodass sich innerhalb der axial ausgestoßenen Flüssigkeit eine weitgehend gleichmäßige Luftverteilung einstellt. Der Bauaufwand bleibt allerdings durch die zusätzliche Anordnung einer Scheibe vergleichsweise hoch, ohne die Ansaugleistung entscheidend zu verbessern. Außerdem bleiben durch diese bekannte Konstruktion Verhältnisse unberücksichtigt, bei denen lediglich Flüssigkeit angesaugt werden soll.

Um die mit der Beaufschlagung der Rotorlagerung einer Pumpe mit den Verunreinigungen der zu pumpenden Flüssigkeit verbundenen Schwierigkeiten zu vermeiden, ist es außerdem bekannt (BE 463837 A), eine Nabe mit zwei gegeneinander um 180 ° winkelversetzten, schraubenförmigen Rotorflügeln vorzusehen, die die Nabe in Förderrichtung überragen und ein Lager für die in die Nabe eingeschraubte Antriebswelle zwischen sich aufnehmen. Die schraubenförmigen Rotorflügel enden im Bereich der Saug- und Druckkanten in einer Tangentialebene zu einer Zylinderfläche, um die die Schraubengänge der Rotorflügel verlaufen.

GB 1 365 385 offenbart eine Strömungsmaschine entsprechend dem Oberbegriff des Anspruchs 1.

Der Erfindung liegt die Aufgabe zugrunde, eine Strömungsmaschine für Flüssigkeiten so auszugestalten, dass mit einfachen konstruktiven Maßnahmen eine merkliche Verbesserung der Förderleistung erzielt werden kann.

Ausgehend von einer Strömungsmaschine der eingangs geschilderten Art löst die Erfindung die gestellte Aufgabe dadurch, dass die Saugkante des Propellerflügels zumindest angenähert entlang der Schnittlinie zwischen der Wendelfläche des Propellerflügels und einer zur Propellerwelle tangentialen Schnittfläche verläuft und dann in eine Verbindungskante zum schraubenförmig verlaufenden Außenrand des Propellerflügels übergeht, die im Wesentlichen der Schnittlinie der Wendelfläche mit einer zur Propellerwelle parallelen, quer zur tangentialen Schnittfläche ausgerichteten Fläche folgt.

Durch den nicht mehr radial zur Rotorwelle ausgerichteten Verlauf der Saugkante des Propellerflügels in einer zur Propellerwelle tangentialen Schnittfläche werden im Zusammenwirken mit einer anschließenden Verbindungskante, die im Wesentlichen der Schnittlinie der Wendelfläche des Propellerflügels mit einer zur Propellerwelle parallelen, aber quer zur Schnittfläche der Saugkante verlaufenden Fläche folgt, in überraschender Weise gute Ansaugbedingungen sichergestellt, die für eine erhöhte Förderleistung der angesaugten Flüssigkeit sorgen, und zwar unabhängig davon, ob lediglich Flüssigkeit angesaugt oder in die angesaugte Flüssigkeit Luft eingetragen werden soll. Der Verlauf der Saugkante des Propellerflügels in einer zur Propellerwelle tangentialen Schnittfläche schließt allerdings einen radial zur Rotorwelle ausgerichteten Saugkantenabschnitt nicht aus, wiewohl mit einem solchen radialen Saugkantenabschnitt im Allgemeinen eine Verschlechterung der Ansaugverhältnisse in Kauf genommen werden muss.

Besonders günstige Ansaugbedingungen ergeben sich in diesem Zusammenhang für die Strömungsmaschine, wenn die Saugkante und die anschließende Verbindungskante zum schraubenförmig verlaufenden Außenrand des Propellerflügels annähernd die gleiche Länge aufweisen.

Eine Steigerung der Förderleistung und des gerichteten Ausstoßes wird möglich, wenn der Propellerflügel in einem mit der Druckkante endenden Umfangsbereich einen aus der Wendelfläche im Drehsinn des Propellers ausgebogenen Randabschnitt aufweist und wenn die Druckkante durch einen zusätzlichen, gegenüber der Wendelfläche und dem ausgebogenen Randabschnitt im Sinne einer Vergrößerung der Steigung abgewinkelten Endsteg des Propellerflügels gebildet wird. Durch den in einem abströmseitigen Umfangsbereich des Propellers in Drehrichtung aus der Wendelfläche des Propellerflügels ausgebogenen Randabschnitt wird die vom Propeller erfasste Strömung zusätzlich beschleunigt, wobei durch den die Druckkante des Propellerflügels bildenden, entsprechend geneigten Endsteg vermehrter Druck auf die abströmende Flüssigkeitsströmung ausgeübt wird. Durch die Summe dieser Maßnahmen kann daher ein vorteilhafter Propeller mit einem guten Wirkungsgrad zur Verfügung gestellt werden, insbesondere dann, wenn sich der aus der Wendelfläche ausgebogene Randabschnitt entlang eines Umfangbereichs von angenähert 90° erstreckt.

Der Durchsatz durch den Propeller der Strömungsmaschine hängt unter anderem von der Anzahl der verwendeten Propellerflügel ab. Obwohl mit einem einzigen Propellerflügel durchaus ansprechende Förderleistungen erbracht werden können, ergeben sich besonders vorteilhafte Durchsatzbedingungen, wenn der Propeller zwei um 180° phasenversetzte Propellerflügel aufweist, weil in diesem Fall der Konstruktionsaufwand im Vergleich zu einem mehrflügeligen Propeller noch beschränkt bleibt.

Aufgrund der guten Fördereigenschaften lassen sich erfindungsgemäße Strömungsmaschinen für unterschiedliche Zwecke vorteilhaft einsetzen. So ist es möglich, den leitringlosen Propeller als Rührwerk zu verwenden, indem der Propeller in die zu rührende Flüssigkeit, beispielsweise Gülle oder Abwässer, eingebracht wird, um die Flüssigkeit mit oder ohne zusätzliche Lufteintragung in eine Umwälzströmung zu versetzen. Es ist aber auch der Einsatz der erfindungsgemäßen Strömungsmaschine als Pumpe vorteilhaft. In diesem Fall ist durch ein Pumpengehäuse für eine Anschlussmöglichkeit einer Förderleitung für die gepumpte Flüssigkeit zu sorgen.

In der Zeichnung ist der Erfindungsgegenstand beispielsweise dargestellt. Es zeigen
- Fig. 1: einen ein Rührwerk bildenden Propeller einer erfindungsgemäßen Strömungsmaschine für Flüssigkeiten in einer schematischen Seitenansicht,
- Fig. 2: einen Schnitt nach der Linie II-II der Fig. 1 in einem kleineren Maßstab,
- Fig. 3: eine stirnseitige Ansicht des Propellers in einem kleineren Maßstab,
- Fig. 4: einen Schnitt nach der Linie IV-IV der Fig. 3 in einem größeren Maßstab,
- Fig. 5: eine als Pumpe dienende Strömungsmaschine in einem schematischen Längsschnitt und
- Fig. 6: eine der Fig. 5 entsprechende Darstellung Konstruktionsvariante einer erfindungsgemäßen Strömungsmaschine im Pumpeneinsatz

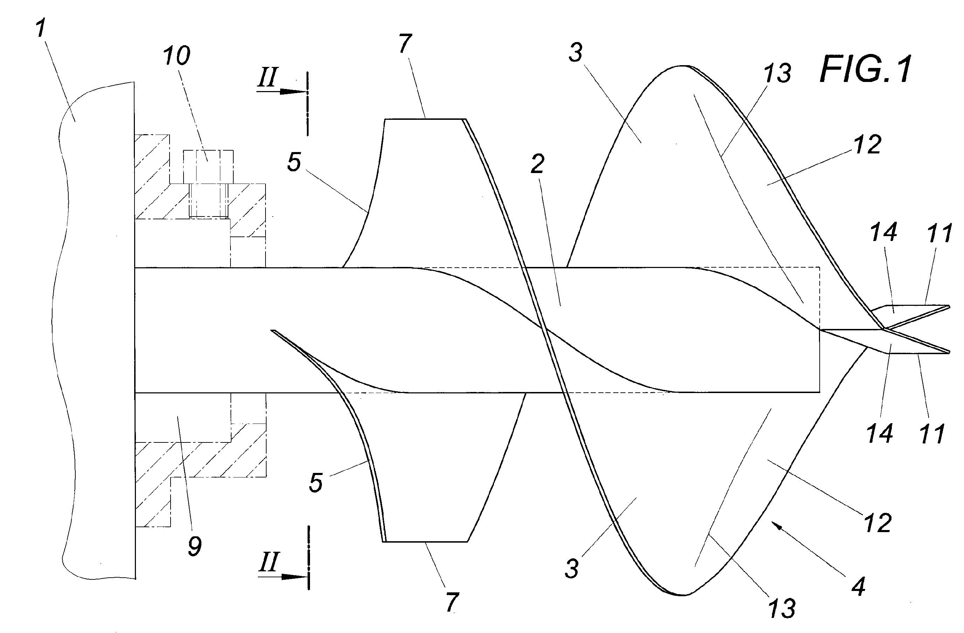

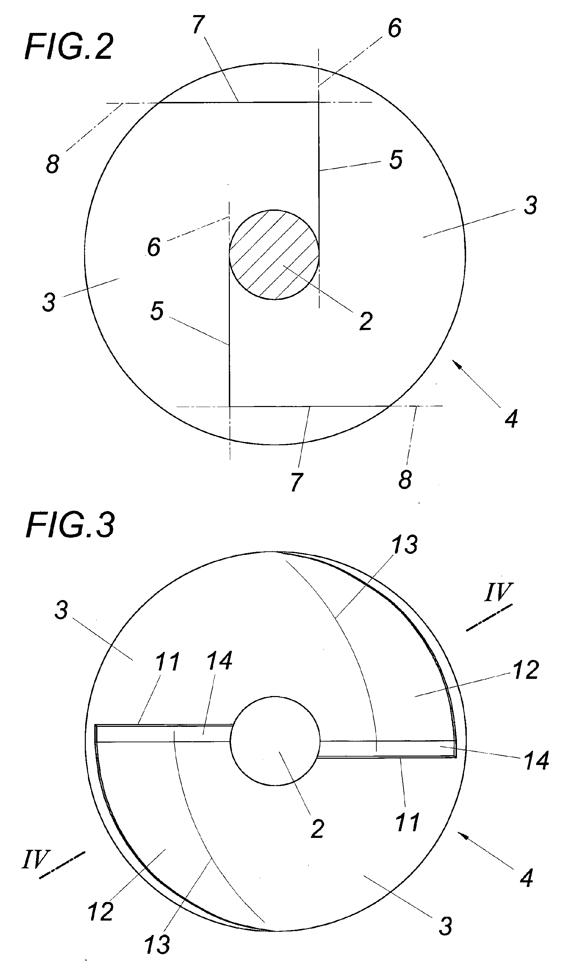

Die Strömungsmaschine gemäß der Fig. 1 wird als Rührwerk verwendet, das zum Beispiel in einen Güllebehälter eingesetzt wird, und weist eine von einem Tauchmotor 1 angetriebene Propellerwelle 2 auf, die zwei um 180° phasenversetzt angeordnete Propellerflügel 3 trägt, die sich in Form einer Wendel mit einer vollen Windung entlang der Propellerwelle 2 erstrecken. Der Antrieb der Propellerwelle 2 muss jedoch keinesfalls durch einen Tauchmotor 1 erfolgen und kann beispielsweise über eine Zapfwelle vorgenommen werden. Damit sich für den durch die beiden Propellerflügel 3 gebildeten Propeller 4 vorteilhafte Ansaugbedingungen ergeben, verläuft die Saugkante 5 der Propellerflügel 3 nicht in herkömmlicher Weise in radialer Richtung, sondern in einer Schnittfläche 6, die tangential zur Propellerwelle 2 verläuft, wie dies der Fig. 2 entnommen werden kann. Im Ausführungsbeispiel ist diese Schnittfläche 6 eine ebene Fläche, was einfache Herstellungsbedingungen für die Saugkante 5 schafft, weil die Propellerflügel 3 lediglich entlang dieser ebenen Schnittfläche 6 zu besäumen sind.

Aus den Fig. 1 und 2 ist zu entnehmen, dass die Saugkanten 5 nicht bis zum Außenrand der Propellerflügel 3 verlaufen. Die Saugkanten 5 gehen vielmehr in Verbindungskanten 7 über, die im Wesentlichen der Schnittlinie der Wendelfläche der Propellerflügel 3 mit einer zur Propellerwelle 2 parallelen, aber quer zur tangentialen Schnittfläche 6 ausgerichteten Fläche 8 folgen (Fig. 2), die wiederum vorteilhaft eben ist. Die Anordnung ist dabei so getroffen, dass die Länge der Saugkanten 5 zumindest angenähert der Länge der Verbindungskanten 7 entspricht. Mit einer solchen Ausbildung der Einströmseite des Propellers 4 können mit einfachen konstruktiven Mitteln vorteilhafte Ansaugbedingungen geschaffen werden, und zwar nicht nur für die Flüssigkeit, in die das Rührwerk eingesetzt wird, sondern auch für den Fall dass in die Flüssigkeit Luft eingetragen werden soll.

Zu diesem Zweck kann auf der dem Tauchmotor 1 zugekehrten Saugseite des Propellers 4 ein von der Propellerwelle 2 durchsetzter Ringraum 9 vorgesehen werden, wie dies in der Fig. 1 strichpunktiert angedeutet ist. Da dieser Ringraum 9 über einen Anschluss 10 an eine Luftansaugleitung angeschlossen ist, wird über die Propellerflügel 3 aus dem Ringraum 9 Luft angesaugt, die in axialer Richtung in den Propeller 4 strömt und sich mit der ebenfalls angesaugten Flüssigkeit während des Durchströmens des Propellers 4 innig mischt.

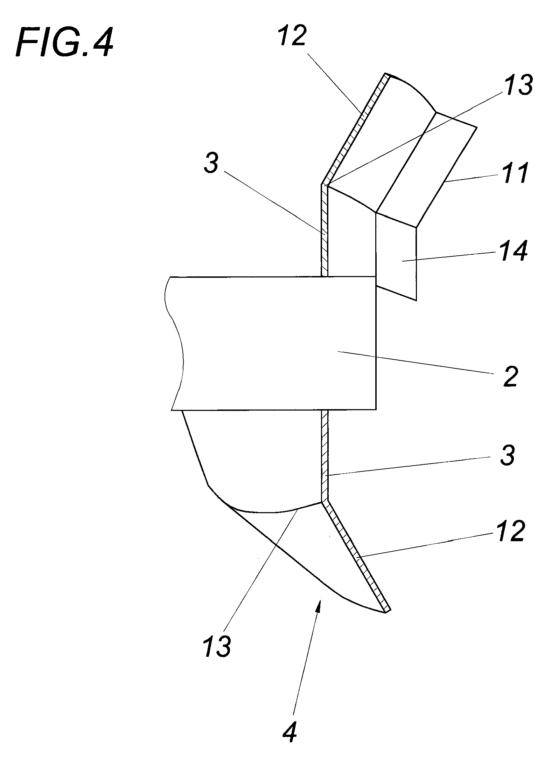

Die mit Hilfe der Propellerflügel 3 in axialer Richtung durch den Propeller 4 geförderte, allenfalls mit Luft angereicherte Flüssigkeitsströmung kann auf der Ausströmseite des Propellers 4 zusätzlich beschleunigt werden. Hierfür bilden die Propellerflügel 3 in einem mit einer Druckkante 11 abgeschlossenen Umfangsbereich von im Wesentlichen 90° einen Randabschnitt 12, der aus der Wendelfläche des jeweiligen Propellerflügels 3 im Drehsinn des Propellers 4 ausgebogen ist, wie dies insbesondere die Fig. 3 und 4 erkennen lassen. Der Biegebereich ist dabei durch eine Linie 13 angedeutet. Die mit dieser Ausbiegung erreichbare Beschleunigung des ausströmenden Flüssigkeitsstromes wird zusätzlich durch einen abgewinkelten Endsteg 14 verstärkt, der die Druckkante 11 bildet und im Sinne einer Vergrößerung der Steigung gegenüber der Wendelfläche der Propellerflügel 3 geneigt verläuft. Durch diese ausströmseitigen Maßnahmen wird der Ausstoß der Flüssigkeit bzw. des Flüssigkeit-Luftgemisches aus dem Rührwerk und damit die Rührwirkung innerhalb des das Rührwerk aufnehmenden Behälters entsprechend unterstützt.

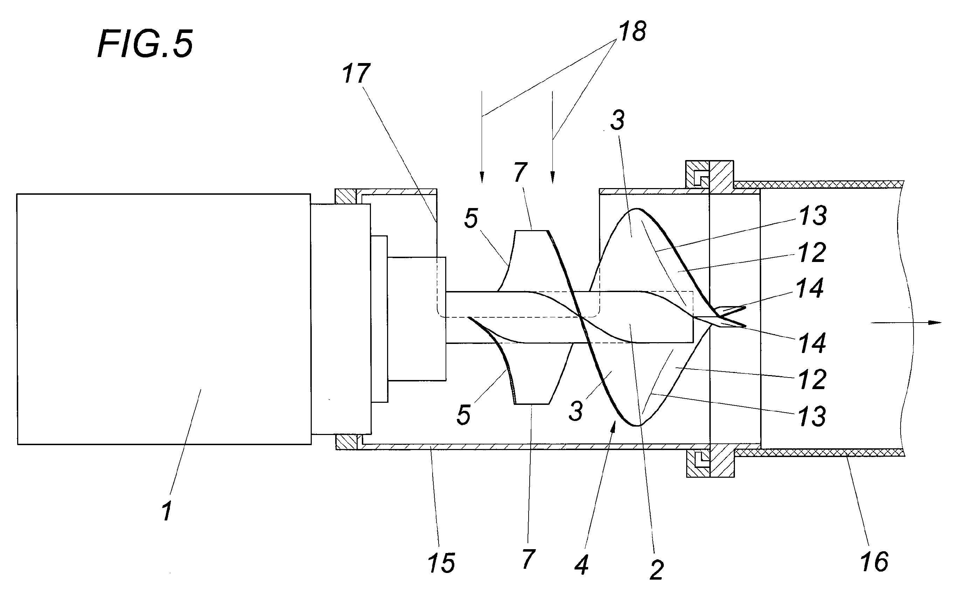

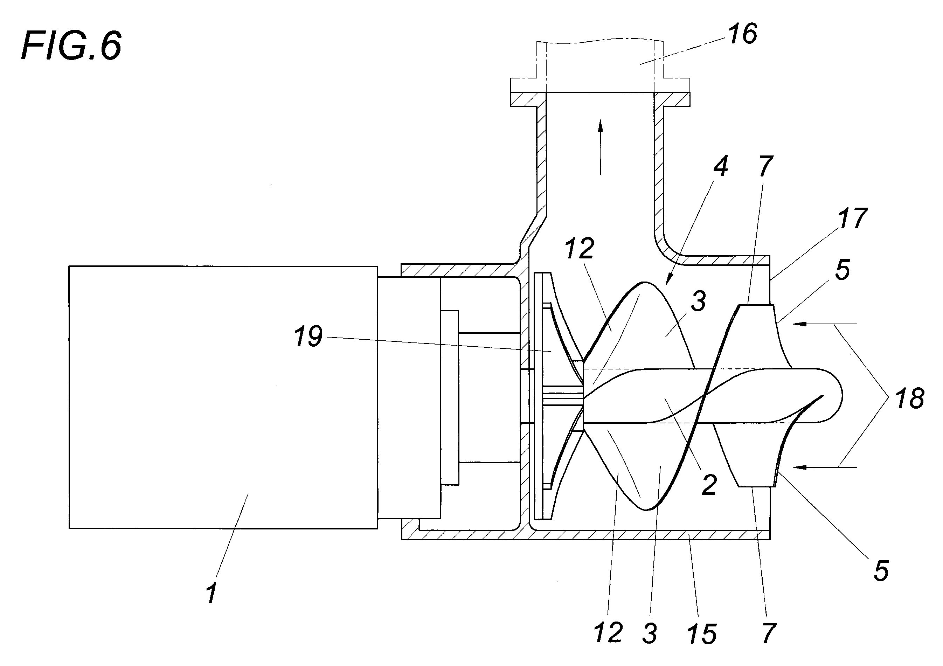

Wie den Ausführungsbeispielen der Fig. 5 und 6 entnommen werden kann, können erfindungsgemäße Strömungsmaschinen auch vorteilhaft als Flüssigkeitspumpen eingesetzt werden. Zu diesem Zweck braucht ja lediglich ein Pumpengehäuse 15 vorgesehen zu werden, das das Abströmende des Propellers 4 umschließt und an das eine Förderleitung 16 für die über den Propeller 4 ausgestoßene Flüssigkeit angeschlossen werden kann, sodass die beispielsweise über eine Ansaugöffnung 17 gemäß den Strömungspfeilen 18 angesaugte Flüssigkeit unter einem entsprechenden Förderdruck in die Förderleitung 16 ausgestoßen wird. Gemäß dem Ausführungsbeispiel nach der Fig. 5 wird das Pumpengehäuse 15 an einen Tauchmotor 1 angeschlossen, über den die Propellerwelle 2 angetrieben wird. Der Antrieb kann selbstverständlich auch über eine Zapfwelle oder dgl. erfolgen. Der Propeller 4 der als Pumpe eingesetzten Strömungsmaschine stimmt im Wesentlichen mit dem Propeller 4 gemäß der Fig. 1 überein, der als Rührwerk eingesetzt wird.

Zum Unterschied zu der Fig. 5 wird gemäß dem Ausführungsbeispiel nach der Fig. 6 der Tauchmotor 1 nicht an der Ansaugseite des Propellers 4, sondern auf der gegenüberliegenden Abströmseite angeschlossen. Außerdem ist an die Propellerflügel 3 ein mehrflügeliges Pumpenrad 19 angeschlossen, das hilft, die axiale Flüssigkeitsströmung des Propellers 4 in eine radiale Strömung umzulenken und in die radial angesetzte Förderleitung 16 auszustoßen. In diesem Fall entfallen die abgewinkelten Endstege 14 im Bereich der Druckkanten.

Die Erfindung ist selbstverständlich nicht auf die dargestellten Ausführungsbeispiele beschränkt und kann in vielfältiger Weise abgewandelt werden, weil es bei der Ausbildung des Propellers 4 entscheidend auf den Verlauf der Saugkante 5 und der anschließenden Verbindungskante 7 der Propellerflügel 3 ankommt. Dies bedeutet aber nicht, dass die im Wesentlichen in einer zur Propellerwelle 2 tangentialen Schnittfläche 6 verlaufende Saugkante 5 nicht an einen radialen Abschnitt der Saugkante anschließen kann.

## Patentansprüche

1. Strömungsmaschine für Flüssigkeiten mit einem angetriebenen Propeller (4), der wenigstens einen entlang einer Propellerwelle (2) wendelförmig verlaufenden Propellerflügel (3) mit einer Saug- und einer Druckkante (5, 11) aufweist, wobei die Saugkante (5) des Propellerflügels (3) zumindest angenähert entlang der Schnittlinie zwischen der Wendelfläche des Propellerflügels (3) und einer zur Propellerwelle (2) tangentialen Schnittfläche (6) verläuft und **dadurch gekennzeichnet, dass** die Sanghante dann in eine Verbindungskante (7) zum schraubenförmig verlaufenden Außenrand des Propellerflügels (3) übergeht, die im Wesentlichen der Schnittlinie der Wendelfläche mit einer zur Propellerwelle (2) parallelen, quer zur tangentialen Schnittfläche (6) ausgerichteten Fläche (8) folgt.

2. Strömungsmaschine Anspruch 1, **dadurch gekennzeichnet, dass** die Saugkante (5) und die Verbindungskante (7) angenähert die gleiche Länge aufweisen.

3. Strömungsmaschine nach Anspruch 1 oder 2, **dadurch gekennzeichnet, dass** der Propellerflügel (3) in einem mit der Druckkante (11) endenden Umfangsbereich einen aus der Wendelfläche im Drehsinn des Propellers (4) ausgebogenen Randabschnitt (12) aufweist und dass ein gegenüber der Wendelfläche und dem ausgebogenen Randabschnitt (12) im Sinne einer Vergrößerung der Steigung abgewinkelter Endsteg (14) des Propellerflügels (3) die Druckkante (11) bildet.

4. Strömungsmaschine nach Anspruch 3, **dadurch gekennzeichnet, dass** sich der aus der Wendelfläche ausgebogene Randabschnitt (12) entlang eines Umfangbereichs von angenähert 90° erstreckt.

5. Strömungsmaschine nach einem der Ansprüche 1 bis 4, **dadurch gekennzeichnet, dass** der Propeller (4) zwei um 180° phasenversetzte Propellerflügel (3) aufweist.

6. Strömungsmaschine nach einem der Ansprüche 1 bis 5, **dadurch gekennzeichnet, dass** der Propeller (4) ein Rührwerk bildet.

7. Strömungsmaschine nach einem der Ansprüche 1 bis 5, **dadurch gekennzeichnet, dass** der Propeller den Rotor einer Pumpe bildet.

## Claims

1. Flow machine for liquids comprising a driven propeller (4) which comprises at least one propeller blade (3) which extends helically along a propeller shaft (2) and has a suction edge and a pressure edge (5, 11), wherein the suction edge (5) of the propeller blade (3) extends at least approximately along the intersection line between the helical surface of the propeller blade (3) and a sectional surface (6) tangential to the propeller shaft (2) and **characterised in that** the suction edge then becomes a connection edge (7) with respect to the outer edge of the propeller blade (3) extending in a spiral manner, which connection edge follows substantially the intersection line of the helical surface with a surface (8) which is oriented in parallel with the propeller shaft (2) and transversely with respect to the tangential sectional surface (6).

2. Flow machine as claimed in claim 1, **characterised in that** the suction edge (5) and the connection edge (7) are approximately the same length.

3. Flow machine as claimed in claim 1 or 2, **characterised in that** the propeller blade (3) comprises, in a peripheral region terminating with the pressure edge (11), an edge portion (12) which is bent out from the helical surface in the direction of rotation of the propeller (4) and **in that** an end web (14) of the propeller blade (3) which is bent with respect to the helical surface and the bent-out edge portion (12) in terms of an increase in pitch forms the pressure edge (11).

4. Flow machine as claimed in claim 3, **characterised in that** the edge portion (12) which is bent out from the helical surface extends along a peripheral region of approximately 90°.

5. Flow machine as claimed in any one of claims 1 to 4, **characterised in that** the propeller (4) comprises two propeller blades (3) which are offset by 180°.

6. Flow machine as claimed in any one of claims 1 to 5, **characterised in that** the propeller (4) forms an agitator.

7. Flow machine as claimed in any one of claims 1 to 5, **characterised in that** the propeller forms the rotor of a pump.

## Revendications

1. Turbomachine pour liquides avec une hélice entraînée (4) qui présente au moins une pale d'hélice (3) s'étendant de manière hélicoïdale le long d'un arbre d'hélice (2) avec un bord de pression et un bord d'aspiration (5, 11), le bord d'aspiration (5) de la pale d'hélice (3) s'étendant au moins approximativement le long de la ligne d'intersection entre la surface hélicoïdale de la pale d'hélice (3) et une surface d'intersection tangentielle (6) à l'arbre d'hélice (2), **caractérisée en ce qu'**ensuite, le bord d'aspiration passe dans un bord de jonction (7) vers le bord extérieur, allant en forme d'hélice, de la pale d'hélice (3) qui suit sensiblement la ligne d'intersection de la surface hélicoïdale avec une surface (8) orientée parallèlement à l'arbre d'hélice (2), transversalement à la surface d'intersection (6) tangentielle.

2. Turbomachine selon la revendication 1, **caractérisée en ce que** le bord d'aspiration (5) et le bord de jonction (7) présentent approximativement la même longueur.

3. Turbomachine selon la revendication 1 ou 2, **caractérisée en ce que** la pale d'hélice (3) présente, dans une zone périphérique se terminant avec le bord de pression (11), une section de bord (12) courbée depuis la surface hélicoïdale dans le sens de rotation de l'hélice (4) et **en ce qu'**une barrette d'extrémité (14), pliée dans le sens d'un agrandissement de l'inclinaison vis-à-vis de la surface hélicoïdale et de la section de bord (12) courbée, de la pale d'hélice (3) forme le bord d'aspiration (11).

4. Turbomachine selon la revendication 3, **caractérisée en ce que** la section de bord (12) courbée depuis la surface hélicoïdale s'étend le long d'une zone périphérique d'environ 90°.

5. Turbomachine selon l'une des revendications 1 à 4, **caractérisée en ce que** l'hélice (4) présente deux pales d'hélice (3) avec un décalage de phase de 180°.

6. Turbomachine selon l'une des revendications 1 à 5, **caractérisée en ce que** l'hélice (4) forme un agitateur.

7. Turbomachine selon l'une des revendications 1 à 5, **caractérisée en ce que** l'hélice forme le rotor d'une pompe.
